# EUROPEAN PATENT APPLICATION

(11) **EP 1 382 242 A1**
(43) Date of publication of application: **21.01.2004**
(21) Application number: 03076871.7
(22) Date of filing: 13.06.2003
(51) Int. Cl.: A01K 97/12

(54) **Signaller of bite by tip for fishing rod**

(30) Priority: 18.07.2002 IT AP20020007
(71) Applicant: O.M.C. di Federici Stefano, 63037 San Benedetto del Tronto (AP) (IT)
(72) Inventor: The designation of the inventor has not yet been filed

(57) **Abstract**

The present invention concerns a signaller of bite to fix on the tip of the fishing rod what it automatically signals, is the vibration of the tip owed to you her, that the possible loosening of the fishing-line.

## Description

The present question of European Brevet is a signaller of bite to fix on the tip of the fishing rod.

This device has been realized to solve the problem related to the recognition of the bait from the fish. Espicially, in the sea bottom fishing, surf casting it resulted particurarly difficult to individualize the first approaches of the fish with the bait.

The traction of the fishing-line is minimum and fast and doesn't transmit an ample oscillation to the tip of the fishing rod ,easily visible, but a very small vibration of it.That happens, mostly when the bait is attached by small fish, that, not being able to swallow it, they eat it completely.

Besides can happen that the fish after having bite the bait goes toward the fisherman loosening the fishing-line and not creating any movement of the tip anymore.

It is more difficult to perceive at night such signals in presence of wind or waves, producing continuous irregular movement of the tip.

This problem forces the fisherman to bring strong fishing rods to use in base the meteorological conditions; the fisherman generally uses the fishing rod with the thinnnest tip to perceive and values its movement, instaed of a strong fishing rod that has several advantages such as: the distance of the throwing, the fishing-line of greater diameter and less difficulties on fishing big fish ect...

The systems used nowdays , such as: metallic bells, chemical bright phial, sensors of survey, traction and vibration of the fishing-line ect., they are not good to signal the presence of small fish, mostly during bad meteorological conditions.

In those cases , the fisherman usually realizes the disappearances of the bait only when the fishing-line is out of the water.

On the base of these considerations we have conceived our device that includes a small container to anchor on the tip of the fishing rod; and what it has a double function: it automatically signals the vibration and changes it bending or angling of the tip.

For all these reasons you can understand the convenience of this tool that signals to the fisherman, by reflex, when the fish bites the bait. This device allows the fisherman to clutch the fish before it realizes the presence of the hook and throw back the bait, or unthreads it.

Besides the fisherman is warned also in the case the fish, after having bite the bait you she go verse of him loosening the fishing-line, the fisherman can value, besides, when it is necessary to put again the bait as he hears the attacks of the small fish.

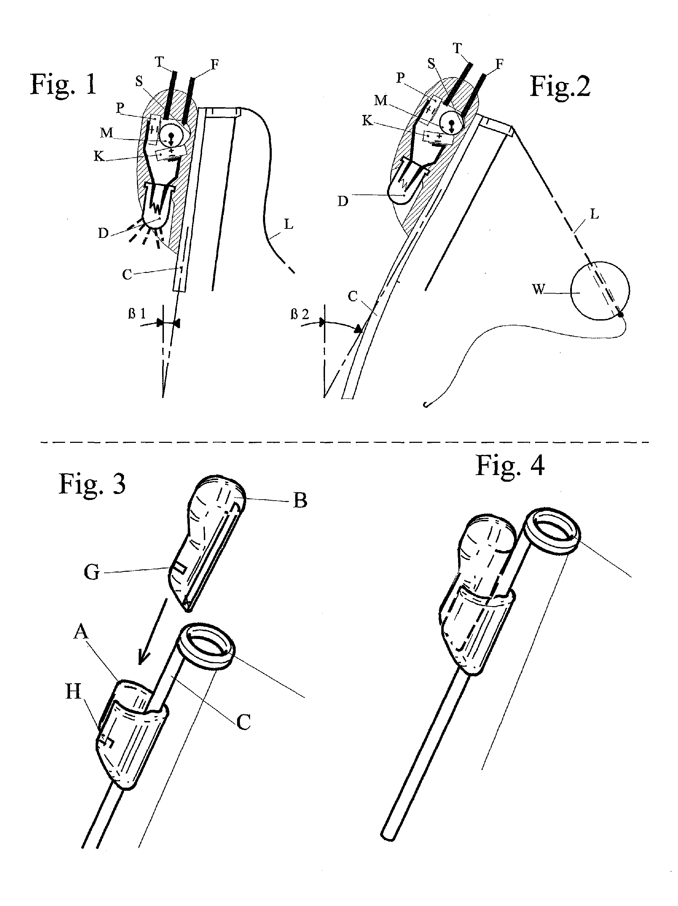

The description of this device is more clear seeing the enclosed illustrated design. The Figure 1 and Figure 2, is a representation partly sectioned of the model just described, illustrates the operation in base to the different angling assumed by the tip of the fisching rod.

With reference to the table of sketch attached, the Fig. 1 represent a small container to anchor to the tip (C) prepared to an angling (β1) to whose inside they are inserted two electric accumulators (P) and (K), prepared in such way that a mass (M) in this case of spherical form, exploiting the attraction of the strength of gravity bridge fà and she closes the electric circuit among (P) and (K) turning on the diffuser (D).

In the Fig. 2 to vary some angling of the tip in (β2), that in a fishing rod to assume under the preventive traction of the fishing-line (L) to which the lead is tied up (W), it is noticed that the mass (M) to vary some inclination of its plan of support it rolls and to rest himself on the wall (S) leaving the electric contact open among the accumulator (P) and (K) deriving the turning off of the diffuser of it (D).

In the case of vibration of the tip produced from you her some fishes on the bait that the fishing-line pushes (L), the mass (M) being free to flow or to rotate, thanks to its inactivity, it goes to repeatedly touch against the poles of the accumulators (P) and (K) temporarily closing accordingly the electric circuit and operating to impulses the diffuser (D).

In the hypothesis that the fish after having bite the bait goes toward the fisherman the tip not having the bending anymore of (β2) as suitable in Fig.2 he repurchases the angling of (β1) in Fig. 1 with consequent rolling of the mass (M) and the signaller's lighting (D).

Besides using as you contact voters the same bases of the accumulators, owing to them to periodically replace, putting again the new batteries, the surfaces of contact will be every time renewed reducing or eliminating the maintenance and claner of the surfaces you consume.

E' been eventually anticipated a lock (T) to make to advance stopping the superfluous operation of the signaller of it during the transport and a pivot (F) that doing him advance gradually decreases progressively the distance of the mass (M) from the contact (P) such adjustable signaller making to the receipt of the vibrations.

Other system to stop its operation of the signaller will be the approach of a permanent magnet to the wall (S) that it would maintain glued the metallic mass (M) on such position in the case a permeable metal is magnetically used.

Such device being positioned in such way , it also results insensitive to the side violent gusts of wind as the mass (M) in the possible move or side rolling not và to close the contact among (P) and (K).

For great clarity: once placed the fischin rod with one determined angling of (ß1), as in Fig. 1 (but not necessarily next to the perpendicolarity in how much this depends on the positioning of the signaller and the form of the relative components) that it allows the activation of the diffuser of it (D), subsequently when he is put in traction it estimates the fishing-line (L) under the load of the lead (W), it achieves a bending of the tip of it (C) as illustrated in Fig.2 with consequent turning off of the diffuser (D).

To the perception of the vibrations the diffuser (D) it flashes, and if the fish will be directed toward the fisherman the diffuser (D) he will stay turned on.

The regulation of the sensibility of such device therefore it is also defined through the greatest or small angle of intervention among (β1) and (β2) defined by the static inclination in which the fisching-rod will be positioned without the traction of the fishing-line and from the following dynamic angling of the tip, assumed with the preventive traction of the fishing-line under the resistance of the lead (W).

Even if in the attached table it is illustrated a mechanism with a mass (M) of spherical form, nothing obsolete to use a mass of irregular form or a drop of mercury or I liquidate electric conductor, as to foresee an acoustic-bright diffuser or singly, or emitter of so that electromagnetic receivable from a distance plant.

In the representation they are illustrated, what surfaces of the electric contacts, the same bases of the accumulators but nothing obsolete to otherwise prepare said accumulators, as in the used quantity, subsequently connecting them to two tilted plans what negative and positive pole.

Considering the point where this signaller is applied, a suitable rapid support has eventually been anticipated with ( A ) in Fig. 3 particularly tapered for not creating grip to the fishing-line in the phase of throwing.

Internally to the support they are found, to the respective opposed sides, leaning two teeth of arrest (H) that they will go to pair off herself with the respective centers (G) you box, you respectively position on the signaller (B) once inserted in the support ( A ) as illustrated in Fig. 4.

For the dismantlement it will be enough ruotre the signaller (B) on a side, in such way that the teeth of arrest are redeemed, and you/he/she can easily be extracted.

The support ( A ) being open on a side offers a certain elasticity, allowing the assemblage of it on tips (C) of different diameter.

## Claims

1. Signaller of by to apply on the tip of the fishing rod, **characterized by** the fact to understand a mass (M) free to roll, to capsize herself or to crawl exploiting both the strength of gravity and his inactivity, to vary some angling assumed of the device or of the present vibrations, going to touch against two contacts voters (P) and (K) with relative poles + and - he/she closes an electric circuit fed by one or more electric accumulators operating an external diffuser (D).

2. Signaller of described in the claim 1 **characterized by** to possess an external diffuser (D) with alone propagation of bright signal.

3. Signaller of described in the claim 1 **characterized by** to possess an external diffuser (D) with alone propagation of sonorous signal.

4. Signaller of described in the claim 1 **characterized by** to possess an external diffuser (D) with alone propagation of signal with so that electromagnetic.

5. signaller of described in the claim 1 **characterized by** to possess a mass (M) of nature liquid -conductor electrically.

6. Signaller of described in the claim 1 **characterized by** to possess a mass (M) of spherical form.

7. Signaller of described in the claim 1 **characterized by** to possess a mass (M) of irregular form with moved baricentro and consequent easy turnover or glide

8. Signaller of described in the claim 1 **characterized by** to possess a mass (M) composed by a drop of mercury.

9. Signaller of described in the claim 1 **characterized by** to possess an accumulator of energy (D) photoelectric.

10. Signaller of described in the claim 1 **characterized by** to possess an external diffuser that contemporarily propagates bright signals, sonorous and electromagnetic.
